# EUROPEAN PATENT APPLICATION

(11) **EP 4 718 604 A1**
(43) Date of publication of application: **01.04.2026**
(21) Application number: 25182567.5
(22) Date of filing: 13.06.2025
(51) Int. Cl.: H01M 50/213, H01M 50/224, H01M 50/244, H01M 50/249, H01M 50/291, H01M 50/293, H01M 50/342, H01M 50/367, H01M 10/655

(54) **BATTERY BOX AND BATTERY PACK**

(30) Priority: 30.09.2024 CN 202411389301; 30.09.2024 CN 202422409484 U; 15.11.2024 WO PCT/CN2024/132233
(71) Applicant: HUIZHOU EVE POWER CO., LTD, Huizhou, Guangdong 516039 (CN); Eve Energy Co., Ltd., Huizhou, Guangdong 516006 (CN)
(72) Inventor: ZHANG, Qian, Huizhou, Guangdong 516039 (CN); LIU, Xiangsheng, Huizhou, Guangdong 516039 (CN)
(74) Representative: Berggren Oy

(57) **Abstract**

A battery box and a battery pack, wherein the battery box comprises a box body (10) having a frame and a bottom plate (12), wherein the frame and the bottom plate (12) are enclosed to form an accommodating cavity (11), and the accommodating cavity (11) is used for accommodating cells (20); a bracket (30) disposed in the accommodating cavity (11), the bracket (30) is used for bearing the cells; and a supporting member for supporting the bracket (30), so as to form a pressure relief space (13) between the bracket (30) and the bottom plate (12).

## Description

### TECHNICAL FIELD

The present disclosure relates to a technical field of batteries, and in particular, to a battery box and a battery pack.

### BACKGROUND

Currently, in order to improve the energy density of batteries, a plurality of batteries are usually connected in series and parallel to form a battery module with a higher capacity and a higher voltage to drive electric vehicles or other equipment. In a cylindrical cell system, the plastic bracket at the bottom of the cell generally needs to be overlapped with four side beams around the box body and then sealed by applying structural adhesive to form a pressure relief chamber between the plastic bracket and the box body.

If too much space is left in the length and width directions of the box body, the plastic bracket will require too much overlapping materials, and it will also be inconvenient for the plastic bracket to overlap with different box bodies, thereby reducing applicability and scope of application of the plastic bracket.

Accordingly, there is an urgent need to design a battery box and a battery pack to address technical problems.

### SUMMARY

According to a first aspect, the present disclosure provides a battery box. The battery box includes a box body including a frame and a bottom plate, the frame and the bottom plate are enclosed to form an accommodating cavity for accommodating cells; a bracket disposed in the accommodating cavity, and the bracket is used for bearing the cells; and a supporting member disposed on a plate surface of the bottom plate facing the accommodating cavity, and the supporting member is used to support the bracket so as to form a pressure relief space between the bracket and the bottom plate.

In a second aspect, the present disclosure provides a battery pack including the battery box described above.

According to the battery box provided in the present disclosure, a supporting member is disposed between a bracket and a bottom plate of a box body. Through this structure, an edge of at least one side of the bracket is directly connected to the bottom plate of the box body by using the supporting member, so that it is not necessary to be overlapped with one side beam of the box body, thereby reducing the production materials of the bracket, which can reduce the production cost of the bracket, so as to realize the mass production of the bracket. Meanwhile, it is also convenient for the bracket to be overlapped with different box bodies, thereby improving the applicability and scope of application of the bracket, and avoiding sealing failure caused by poor flatness of the adhesive sealing surface of the bracket.

According to the battery pack provided in the present disclosure, the applicability and scope of application of the battery pack are improved by using the battery box described above.

### BRIEF DESCRIPTION OF THE DRAWINGS

The following drawings of the embodiments of the present disclosure are included herein as part of the present disclosure for the purpose of understanding the present disclosure. The drawings illustrate the embodiments of the present disclosure and their descriptions, which are used to explain the principles of the present disclosure. The following drawings are provided.
FIG. 1 is a perspective view of a battery box according to some embodiments of the present disclosure.
FIG. 2 is a schematic side view of a battery box according to some embodiments of the present disclosure.
FIG. 3 is an enlarged view of part A in FIG. 2.
FIG. 4 is a schematic structural diagram of a supporting member according to some embodiments of the present disclosure.
FIG. 5 is a schematic side view of a supporting member according to some embodiments of the present disclosure.

List of reference signs:
10-box body; 11-accommodating cavity; 12-bottom plate; 13-pressure relief space; 20-cell; 30-bracket; 31-protrusion portion; 32-positioning hole; 40-supporting member; 41-first bending portion; 42-second bending portion; 421-accommodating groove.

### DETAILED DESCRIPTION

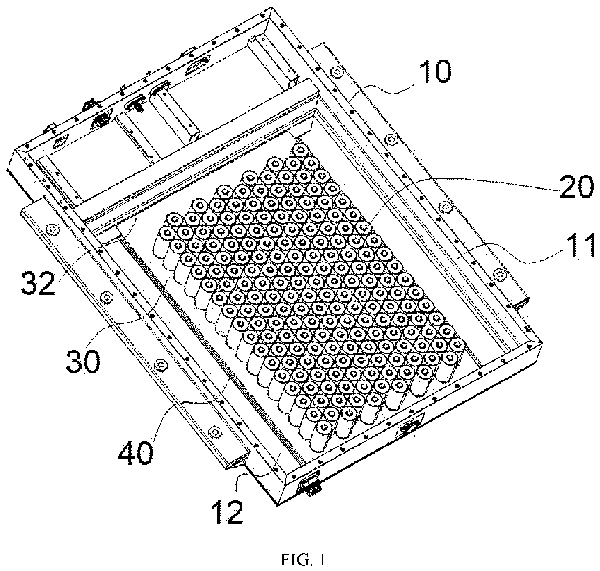

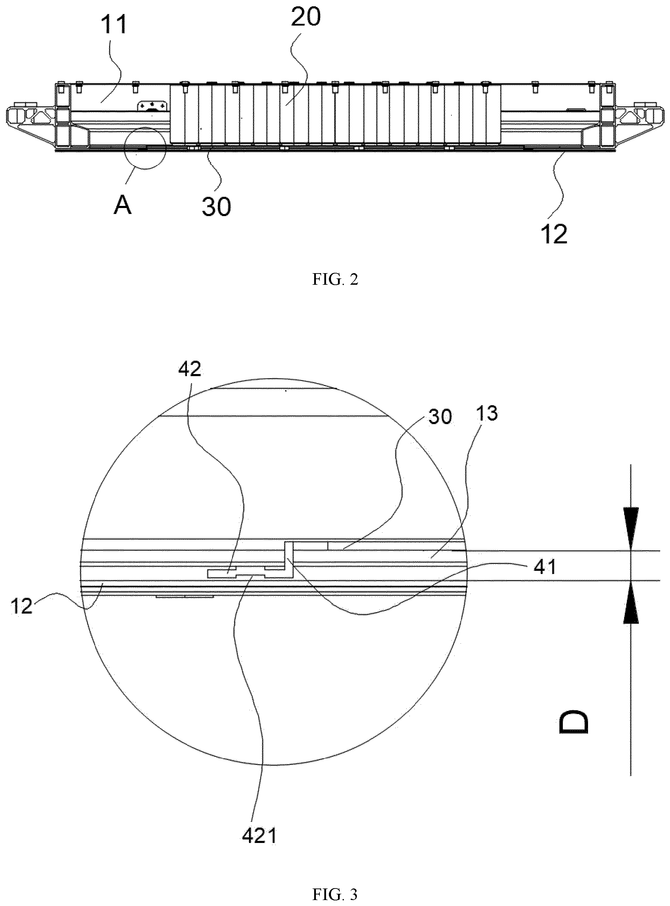

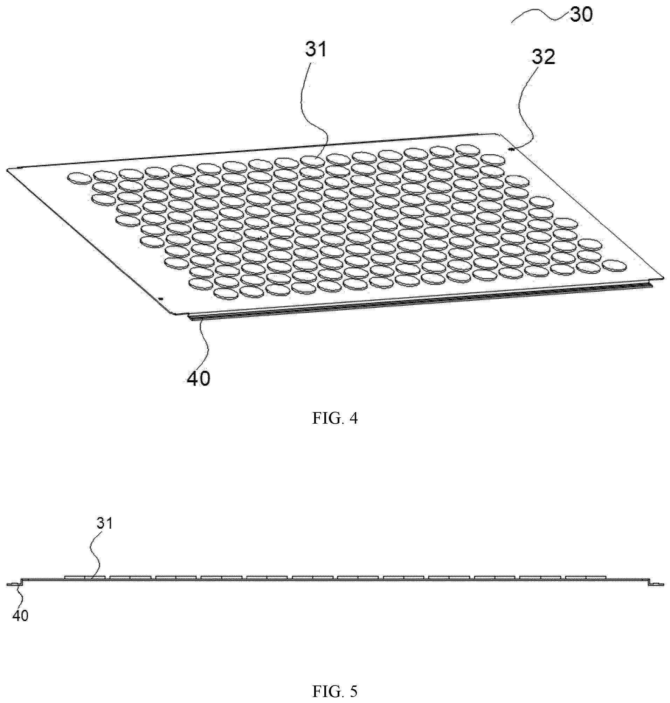

As shown in FIGs. 1 to 5, in a first aspect, embodiments of the present disclosure provide a battery box. The battery box includes a box body 10, the box body 10 includes a frame and a bottom plate 12, wherein the frame and the bottom plate are ecclosed to form an accommodating cavity for accommodating cells. A bracket 30 is disposed in the accommodating cavity 11 for bearing the cells 20. A supporting member 40 is disposed on a plate surface of the bottom plate facing the accommodating cavity 11, and the supporting member 40 is used to support the bracket 30, so as to form a pressure relief space 13 between the bracket 30 and the bottom plate 12.

According to the present disclosure, the supporting member 40 is disposed between the bracket 30 and the bottom plate 12 of the box body 10. Through this structure, an edge of at least one side of the bracket 30 is directly connected to the bottom plate 12 of the box body 10 by using the supporting member 40, so that it is not necessary to be overlapped with one side beam of the box body 10, thereby reducing the production materials of the bracket 30, which can reduce the production cost of the bracket 30, so as to realize the mass production of the bracket 30. Meanwhile, it is also convenient for the bracket 30 to be overlapped with different box bodies 10, thereby improving the applicability and scope of application of the bracket 30, and avoiding sealing failure caused by poor flatness of the adhesive sealing surface of the bracket 30.

In the embodiments of the present disclosure, the box body 10 may be made of an aluminum alloy or a steel plate, and since the density of the aluminum alloy is much smaller than that of a conventional metal material such as steel, the box body 10 made of the aluminum alloy can significantly reduce the overall weight. This is particularly important for electric vehicles because the weight reduction can directly enhance the vehicle's endurance, reduce energy consumption, and may improve the vehicle's handling and acceleration performance. Although the density of the aluminum alloy is low, its strength is quite high. In particular, its strength and rigidity can be further improved through reasonable alloying design and heat treatment process. This enables the aluminum alloy box body 10 to withstand greater external forces and impacts, ensuring the safety and stability of the inner cells 20.

Meanwhile, a dense oxide film is easily formed on the surface of the aluminum alloy, which can effectively prevent the erosion of air, moisture, and other corrosive substances, thereby prolonging the service life of the box body 10. In addition, the corrosion resistance of the aluminum alloy can be further enhanced by surface treatment processes such as anodic oxidation and electrophoretic coating. Furthermore, aluminum alloy has good thermal conductivity, which is critical for thermal management of the cells 20. During charging and discharging of the cells 20, a large amount of heat will be generated. If the heat cannot be dissipated in time, the temperature of the cells 20 will be too high, which will affect the performance and life of the batteries. Therefore, the aluminum alloy box body 10 can help the cells 20 to better dissipate heat and keep the cells 20 running in a suitable temperature range. Aluminum alloy materials have good plasticity and processability, and can be processed into box bodies 10 of various shapes and sizes through various processes such as casting, extrusion, stamping. This allows the aluminum alloy box body 10 to have greater flexibility in design and can be customized and optimized according to specific needs. Aluminum alloy is a recyclable material with a high recovery utilization rate, it has a low environmental impact on the environment during the recycling process. This is in line with the current concept of environmental protection and sustainable development, and is also one of the reasons why the the aluminum alloy box body 10 is favored.

In a case that the box body 10 is made of steel, it is usually made of stainless steel. The stainless steel box body 10 has shows significant advantages in many aspects. The stainless steel box body has higher strength and rigidity, and can withstand greater external pressure and impact, thus ensuring stability and safety of the battery system during transportation and use. This high strength characteristic enables the stainless steel box body 10 to maintain its structural integrity under harsh environmental or high load conditions. The stainless steel has excellent corrosion resistance, which can effectively resist corrosion in corrosive environments such as moisture, acid and alkali. This means that the stainless steel box body 10 can be used for a long time in various harsh environments without corrosion or rust, thereby prolonging the service life of the battery system.

Furthermore, the surface of the stainless steel box 10 is flat and smooth, without no obvious defects, and has good workability. This makes the stainless steel box body 10 not only attractive in appearance, but also adaptable to design requirements of battery systems with various complex shapes. At the same time, the wire drawing treatment or spraying process of the stainless steel surface can further improve its aesthetic appearance and durability. Stainless steel has high electrical conductivity and insulation, which can effectively prevent the occurrence of an electrical accidents. In the design of the box body 10, safety measures such as explosion prevention and electric leakage prevention are usually considered to ensure safe operation of the battery system. The stainless steel battery box body 10 is excellent in these aspects due to its material characteristics, and can provide users with a safer and more reliable battery solution. The surface of the stainless steel box body 10 is smooth and not easy to be stained with dirt, so it is relatively easy to clean and maintain. This not only maintains the aesthetic appearance of the box body 10, but also reduces the risk of corrosion and damage caused by dirt accumulation. Stainless steel is a recyclable material with a high recycling value. When it reaches the end of service life, the stainless steel box 10 can be recycled and processed into new stainless steel products, thereby realizing recycling of resources and reducing the impact on the environment.

In the present disclosure, the bracket 30 is made of plastic. Since the manufacturing process of the plastic bracket 30 is relatively simple, it can be mass-produced by injection molding and other processes, thereby reducing the manufacturing cost. This allows the overall cost of the battery system to be controlled and improves the competitiveness of the product. Compared with a metal bracket 30, the plastic bracket 30 has a lighter weight. This advantage is particularly important in areas such as electric vehicles that require lightweight design, as it helps reduce the weight of the whole vehicle, improves the energy efficiency, and may prolong the endurance mileage. The plastic materials have good processability and can be easily processed into brackets 30 of various shapes and sizes through injection molding, cutting and other processes. At the same time, the installation of the plastic bracket 30 is relatively simple and quick, which improves the production efficiency. The plastic bracket 30 has excellent insulation performance, which can effectively prevent short circuits and electric leakage problems between the cells 20. This is critical for the safe operation of the battery system and can reduce the risk of accidents caused by electrical faults.

Furthermore, the plastic materials generally have good corrosion resistance and wear resistance, and is capable of resisting corrosive substances such as acid and alkali and mechanical wear that may be encountered in a battery system. This is helpful to prolong the service life of the battery system and reduces maintenance costs. The plastic bracket 30 is capable of firmly fixing the cells 20 to prevent the cells 20 from shaking and colliding during driving. At the same time, it can also effectively protect the cells 20 from external damage and erosion. This is of great significance for ensuring the performance and stability of the battery system. Partial plastic bracket 30 can effectively help the battery to dissipate heat by special design and material selection. This is of great significance for improving the working efficiency of the battery and prolonging the service life of the battery. Especially in the process of high power discharging or charging, good heat dissipation performance can maintain the normal operating temperature range of the battery. Plastic materials have relatively little impact on the environment during processing and use, and some plastic materials, such as flame-retardant PC/ABS, also have good flame-retardant properties and environmental protection performance. This is helpful to promote green and sustainable development of the battery system.

In some embodiments, the supporting member 40 includes a first bending portion 41 and a second bending portion 42 that are connected in sequence and arranged at an angle. One end of the first bending portion 41 is connected to the bracket 30 and the other end of the second bending portion 42 is connected to the bottom plate 12. With this arrangement, the structural strength of the supporting member 40 can be improved, thereby satisfying the use requirements of the device. In the present disclosure, the end surface of the second bending portion 42 is connected with the bottom plate 12, and the end face connection ensures the stability and reliability of the connection through its connection method. At the same time, the end surface connection can withstand large torques and loads, which ensures that the device will not fail due to the connection problem during operation. This is of great significance for improving the working efficiency and service life of the device.

In some embodiments, the first bending portion 41 extends along the height direction of the box body 10, the second bending portion 42 extends along the length direction of the box body 10, or the second bending portion 42 extends along the width direction of the box body 10. This not only satisfies the connection requirements between the supporting member 40 and the bottom plate 12, but also facilitates the processing of the first bending section 41 and the second bending section 42, so as to reduce the processing difficulty of the device.

In some embodiments, the included angle between the first bending portion 41 and the second bending portion 42 is a right angle. The right-angle bending can provide more stable structural support, especially in the case that a certain load or force needs to be borne, and the right-angle bending can effectively disperse and resist these forces, thereby ensuring structural stability. At the same time, the right-angle bending can reduce the deformation of the materials during the stress process by controlling the bending angle accurately, thus maintaining the overall shape and dimensional accuracy of the product. Furthermore, right-angle bending is a standardized processing method, which is convenient for batch and standardized production on a production line and improves production efficiency.

Furthermore, compared with other complex bending shapes, the processing technology of right-angle bending is relatively simple, which can reduce the processing time and cost. By adjusting the angle and size of the bending, the right-angle bending can meet the requirements of different products for structure, appearance and function. The right-angle bending can form clear and neat lines and edges, thus improving the overall aesthetics of the product. The right-angle bending is easier to match and combine with the bottom plate 12 and the bracket 30, thus forming an unified and coordinated overall effect. The right-angle bending can maximize the use of materials, reduce the waste of materials, thereby reducing the production cost. The mold design required for right-angle bending is relatively simple, which can reduce the cost of mold manufacturing and replacement.

In other embodiments of the present disclosure, the included angle between the first bending portion 41 and the second bending portion 42 may also be set to other angles. The specific setting should be selected according to the use environment of the device, which can improve the suitability and scope of application of the device to meet the use requirements of the device.

In some embodiments, a spacing distance between the bottom plate 12 and the bracket 30 is D, and 3mm≤D≤12mm. In a case that the spacing distance between the bottom plate 12 and the bracket 30 is greater than 12 mm, the spacing between the bracket 30 and the bottom plate 12 is excessively large, thereby increasing the occupied space of the bracket 30. As a result, the overall volume of the battery box is excessively large, which is unfavorable to the miniaturization of the box body 10. In a case that the spacing distance between the bottom plate 12 and the bracket 30 is less than 3 mm, the spacing between the bracket 30 and the bottom plate 12 is excessively small. While excessively small pressure relief space 13 will limit the release rate of gas or liquid, so that the internal pressure of the system cannot be quickly reduced, thus affecting the pressure relief effect, which may lead to the excessive internal pressure of the system and damage the structure of the cells 20. At the same time, insufficient pressure relief space 13 may lead to the overpressure phenomenon in the system during the pressure relief process. Excessive pressure can damage the components of the box body 10, shorten the service life, or even cause safety accidents. For environments where there is a risk of explosion, a too small pressure relief space 13 may increase the risk of explosion. In a case that an explosion occurs, the explosion pressure cannot be released rapidly due to insufficient pressure relief space 13, which may lead to more serious damage and casualties.

Furthermore, a too small pressure relief space 13 may cause a large gas flow or liquid flow during the pressure relief process, thereby causing structural vibration of the box body 10. This vibration may adversely affect the stability and safety of the cells 20 and reduce the operating efficiency of the system.

In some embodiments, the second bending portion 42 is provided with an accommodating groove 421. The opening of the accommodating groove 421 is disposed toward the bottom plate 12. The accommodating groove 421 is used for accommodating the connecting member. The second bending portion 42 is connected with the bottom plate 12 through the connecting member. By providing the above-mentioned structure, the space of the second bending portion 42 can be reasonably utilized, so that the miniaturization of the device can be realized. In the present disclosure, the connecting member is specifically an adhesive. Since the bonding process is relatively simple, no complex equipment and tools are required, and the operation process is easy to grasp. At the same time, the equipment and the process are simple, and a large amount of energy is not required to be consumed in the bonding process, the cost is relatively low. Furthermore, the bonding can save rivets, bolts and other connecting members, further reducing the cost.

Furthermore, bonding products usually have good sealability, which can effectively prevent the penetration of air, moisture, and stains, and protect the bonded parts. At the same time, organic adhesives usually have good chemical stability and can resist the erosion of a variety of chemicals, thus ensuring a durable bonding effect. The bonding process can achieve bonding between metals, non-metals, and various other materials, including metals, ceramics, plastics, rubbers, wood, and the like. Therefore, the scope of application of bonding can be improved. When the bonding process is used, the stress can be uniformly distributed over the entire bonding surface, thereby avoiding stress concentration problems caused by conventional spot welding, riveting, bolt fixing, and the like. This helps to prolong the service life of the components and improve their reliability. Moreover, no high temperatures are generated during the bonding process, so there is no impact on the metallographic structure of the workpiece, nor will it cause deformation and stress concentration. The bonding process can provide good fatigue resistance, so that the bonding parts can maintain stable performance under repeated stress. Some adhesives have good corrosion resistance, and can resist erosion of various corrosive media, thus ensuring the service life of the bonding parts in harsh environments. The bonding process may eliminate some connecting members and the supporting structure, thereby reducing the weight of the overall structure.

Of course, in other embodiments of the present disclosure, the second bending portion 42 and the bottom plate 12 can also be connected by welding, and the welding can melt the materials through the conduction of thermal energy and fuses them with other materials to form a continuous structural connection. This connection mode can form a larger contact area on the connection surface, so it has better firmness and seismic resistance. The welding connection will not loosen due to heavy loads, vibrations or temperature changes, thereby effectively enhancing the structural strength and stability of the workpiece.

In the process of welding, the molten materials fill the gaps and micro-pores in the joint, thus forming a continuous structural connection. This metal connection can prevent the penetration of gas, liquid and solid, thus ensuring normal operation of the workpiece. Welding connection has good sealing performance, which can meet the requirements of some special working environments or equipment that requires sealing performance. Welding joints can be flush with the surface of the workpiece, and the welding joint has various shapes, which can meet the requirements of different structures and shapes. Welding can also repair and improve the surface of the workpiece, thus improving the overall appearance quality of the workpiece. The appearance quality of welding connections is very important for some products and equipment that require high aesthetics. Welding can not only connect the same materials, but also connect different materials. In the manufacture and assembly of large equipment, welding can organically combine profiles, forgings, and the like according to specific requirements. In addition, welding parameters can be controlled by a computer, which is convenient to realize mass production of welding, thus improving production efficiency. Welding does not weaken the cross section of components, which can save materials. At the same time, the cost of the welding structure is relatively low due to the reasons that the welding process is relatively simple, the processing is simple, and the automatic production is easy to use, thereby reducing the production cost. There is no strong noise during welding construction, and the working conditions are relatively good. In addition, the welding process is relatively simple and easy to master and operate, making welding a widely used processing technology.

In some embodiments, the bracket 30 further includes protrusion portions 31. The protrusion portions 31 are disposed on one side of the bracket 30 away from the bottom plate 12, and the protrusion portions 31 are used for bearing the cells 20. In the present disclosure, when the explosion-proof valve is broken due to excessive internal pressure of the cells 20, the protrusion portion 31 will be squeezed to cause the protrusion portions 31 to rupture, and the gas inside the cells 20 can enter the pressure relief passage from the protrusion portions 31, thereby avoiding the risk of explosion of the cells 20.

In some embodiments, the bracket 30 is also provided with positioning holes 32, and the bracket 30 is connected with the bottom plate 12 in a fixed position through the positioning holes 32. In the present disclosure, the bracket 30 is connected with the bottom plate 12 through the positioning holes 32, so that it is possible to ensure that the bracket 30 and the bottom plate 12 can be accurately butted together during the assembly process, thereby achieving the overall accurate assembly. This is of great significance for improving the stability and reliability of the components. Furthermore, the positioning holes 32 are used in conjunction with a connecting member such as a positioning pin or a bolt, so as to enhance the connection strength and stability between the bracket 30 and the bottom plate 12. The presence of the positioning holes 32 enables the connecting members to be more firmly fixed at the predetermined position, thus avoiding the problem of loose connection or failure caused by position deviation. At the same time, the positioning holes 32 can also disperse the force borne by the connecting members, thereby improving the bearing capacity and durability of the overall structure. During assembly of the components, the presence of the positioning holes 32 can greatly simplify the assembly process. The bracket 30 can be assembled with the bottom plate 12 quickly and accurately through the cooperation of the positioning holes 32 and connecting members such as positioning pins or bolts, thus reducing the assembly time and labor cost. Furthermore, the positioning holes 32 can also reduce the error rate during the assembly process and improve the assembly efficiency and quality. The precise positioning of the positioning holes 32 helps to improve the overall accuracy and performance of the bracket 30 and the bottom plate 12. By accurately controlling the position and size of the positioning holes 32, it is possible to ensure that the relative position between the bracket 30 and the bottom plate 12 remains unchanged during operation, thereby improving the accuracy and stability of movement of the assembly. This is particularly important for mechanical equipments that require high precision and stability. During the use of the device, it is inevitable that parts are damaged or need to be replaced. The presence of the positioning holes 32 makes it more convenient and quick to replace components. Through the cooperation between the positioning holes 32 and the connecting members, the damaged components can be quickly removed and new components can be installed, thereby reducing the maintenance time and downtime loss.

According to a second aspect, some embodiments of the present disclosure provide a battery pack, which includes the battery box as mentioned above.

According to the present disclosure, the supporting member 40 is disposed between the bracket 30 and the bottom plate 12 of the box body 10. Through this structure, an edge of at least one side of the bracket 30 is directly connected to the bottom plate 12 of the box body 10 by using the supporting member 40, so that it is not necessary to be overlapped with one side beam of the box body 10, thereby reducing the production materials of the bracket 30, which can reduce the production cost of the bracket 30, so as to realize the mass production of the bracket 30.

The processes and steps described in all the above embodiments are examples only. Unless adverse effects occur, various processing operations may be performed in an order different from that of the above-described process. The sequence of steps in the above process may be added, combined or deleted according to actual requirements.

In understanding the scope of the present disclosure, the term "comprising" and its derivatives, as used herein, are intended to be open-ended terms that specify the presence of recorded features, elements, components, groups, integers and/or steps, but do not exclude the presence of other unrecorded features, elements, components, groups, integers and/or steps. This concept also applies to words with similar meaning, such as the term "including", "having" and their derivatives.

The term "attached" or "attached" as used herein includes: a configuration in which an element is directly fixed to another element by fixing it directly to another element; a configuration in which an element is indirectly fixed to another element by fixing it to an intermediate member, which in turn is fixed to another element; and a configuration in which one element is integral with another element, that is, one element is substantially a part of another element. This definition also applies to words with similar meanings, such as "connecting", "combing", "coupling", "mounting", "bonding", "fixing" and their derivatives. Finally, terms of degree such as "substantially", "about" and "approximately" as used herein mean a reasonable amount of deviation of the modified term such that the end result is not significantly changed.

Unless otherwise defined, the technical and scientific terms used herein have the same meanings as those commonly understood by a person skilled in the art of the present disclosure. The terms used herein are merely used for the purpose of describing specific implementations and are not intended to limit the present disclosure. A feature described in one embodiment herein can be applied to another embodiment alone or in combination with other features, unless the feature is not applicable in the other embodiment or otherwise specified.

The present disclosure has been described by using the foregoing embodiments, but it should be understood that the foregoing embodiments are used only for the purposes of illustration and description, and are not intended to limit the present disclosure to the scope of the described embodiments. In addition, a person skilled in the art can understand that the present disclosure is not limited to the foregoing embodiments, and further variations and modifications can be made according to the teachings of the present disclosure. These variations and modifications fall within the protection scope of the present disclosure.

## Claims

1. A battery box comprising:
a box body (10) comprising a frame and a bottom plate (12), the frame and the bottom plate (12) being enclosed to form an accommodating cavity (11) for accommodating cells (20);
a bracket (30) disposed in the accommodating cavity (11), the bracket (30) being used to bear the cells (20);
a supporting member (40) disposed on a plate surface of the bottom plate (12) facing the accommodating cavity (11), the supporting member (40) being used to support the bracket (30), so as to form a pressure relief space (13) between the bracket (30) and the bottom plate (12).

2. The battery box according to claim 1, **characterized in that** the supporting member (40) comprises a first bending portion (41) and a second bending portion (42) that are connected in sequence and arranged at an angle, one end of the first bending portion (41) is connected with the bracket (30), and another end of the second bending portion (42) is connected with the bottom plate (12).

3. The battery box according to claim 2, **characterized in that** the first bending portion (41) extends in a height direction of the box body (10), and the second bending portion (42) extends in a length direction of the box body (10) or the second bending portion (42) extends in a width direction of the box body (10).

4. The battery box according to claim 2, **characterized in that** an included angle between the first bending portion (41) and the second bending portion (42) is a right angle.

5. The battery box according to any one of claims 1 to 4, **characterized in that** a spacing distance between the the bottom plate (12) and the bracket (30) is D, wherein 3mm≤D≤12mm.

6. The battery box according to claim 2, **characterized in that** the second bending portion (42) is provided with an accommodating groove (421), an opening of the accommodating groove (421) is disposed toward the bottom plate (12), the accommodating groove (421) is used for accommodating a connecting member, and the second bending portion (42) is connected with the bottom plate (12) through the connecting member.

7. The battery box according to claim 2, **characterized in that** the second bending portion (42) is connected with the bottom plate (12) through welding.

8. The battery box according to any one of claims 1 to 4, **characterized in that** the bracket (30) and the supporting member (40) are formed integrally by injection molding.

9. The battery box according to any one of claims 1 to 4, **characterized in that** the bracket (30) further comprises a plurality of protrusion portions (31) disposed on one side of the bracket (30) away from the bottom plate (12), and the plurality of protrusion portions (31) are used for bearing the cells (20).

10. The battery box according to claim 1, **characterized in that** the bracket (30) is further provided with a plurality of positioning holes (32), and the bracket (30) is connected with the bottom plate (12) in a fixed position.

11. The battery box according to any one of claims 1 to 10, **characterized in that** the box body (10) is made of aluminum alloy or steel plate.

12. The battery box according to any one of claims 1 to 10, **characterized in that** the bracket (30) is made of plastic.

13. The battery box according to any one of claims 1 to 10, **characterized in that** an end face of the second bending portion (42) is connected with the bottom plate (12).

14. The battery box according to any one of claims 1 to 10, **characterized in that** the connecting member comprises an adhesive.

15. A battery pack comprising the battery box according to any one of claims 1 to 14.
